# EUROPEAN PATENT SPECIFICATION

(11) **EP 4 267 837 B1**
(45) Date of publication and mention of the grant of the patent: **25.03.2026**
(21) Application number: 21841040.5
(22) Date of filing: 09.12.2021
(51) Int. Cl.: F01N 9/00, F01N 11/00, F01N 13/00, F01N 3/08

(54) **AN EXHAUST GAS MONITORING SYSTEM**
EIN ABGASÜBERWACHUNGSSYSTEM
UN SYSTÈME DE SURVEILLANCE DES GAZ D'ÉCHAPPEMENT

(30) Priority: 24.12.2020 IN 202041056393
(43) Date of publication of application: 01.11.2023
(73) Proprietor: TVS Motor Company Limited, 600006 Chennai (IN)
(72) Inventor: JYOTHI KANNAN, Madheswaran, Chennai (IN); SABARIRAM, Rajasekar, Chennai (IN); AJAY KUMAR, Vasu, Chennai (IN); DATTA RAJARAM, Sagare, Chennai (IN)
(74) Representative: Patentanwaltskanzlei Matschnig & Forsthuber OG
(86) International application number: PCT/IN2021/051150
(87) International publication number: WO 2022/137252

(56) References cited:
- DE-A1- 10 023 060
- US-A1- 2015 377 102
- US-A1- 2017 114 697
- US-B1- 9 650 981

## Description

### TECHNICAL FIELD

The present subject matter generally relates to a vehicle. The present subject matter specifically but not exclusively relates to an exhaust gas monitoring system in a vehicle.

### BACKGROUND

Air pollution is one of the major concerns across the globe. One of the major contributors is an automobile industry and the consistent increase in the number of automobile consumers.

As automobiles prove to be a major contributor in causing the pollution, automotive companies are working on improving the efficiency of combustion in IC engines and also catalytic converter (an after treatment system) which converts the toxic emissions (CO, HC, NOx), generated due to incomplete combustion, into harmless substances. This catalytic converter reduces NOx to N₂ and oxidises CO and HC to CO₂ and H₂O (as it is playing a pivot role in emission control), the functionality of catalytic converter such as Oxygen Storing Capacity (OSC), Conversion efficiency proves to be critical, hence the functioning of catalytic converter has to be ensured and any deviations from its functionality has to be monitored and the same has to be reported to the user so that the catalytic converter can be changed at the earliest without compromising on emissions and performance.

Known art discloses an on-board catalytic diagnostic system for monitoring the conversion efficiencies of catalytic converter by measuring the oxygen storage capacity (OSC) of the converter, from the outputs of both upstream and downstream oxygen sensors. A method for OSC is created and it is compared with a measured value, the ratio of these predicts the health of the catalytic converter.

Presently, vehicle the exhaust system comes with two oxygen sensors one on the upstream to catalytic converter and the other on the downstream to catalytic converter. Using multiple oxygen sensors (like universal exhaust gas oxygen sensor (UEGO), heated exhaust gas oxygen sensor (HEGO)) for catalytic converter can increase the cost. Any malfunction in any of the sensor can cause abnormal functioning and provides improper feedback related to catalytic converter health.

US 2015/0377102 A1 discloses an internal combustion engine system, which includes an exhaust gas motoring system corresponding to the preamble part of claim 1.

### SUMMARY OF INVENTION

The invention is directed at an exhaust gas motoring system in a vehicle as described in claim 1 and a pertinent method as described in claim 13. The dependent claims describe further optional features of the invention.

### BRIEF DESCRIPTION OF THE DRAWINGS

The detailed description is described with reference to an embodiment of a scooter type saddle vehicle along with the accompanying figures. The same numbers are used throughout the drawings to reference like features and components.
**Fig. 1** illustrates a right-side view of an exemplary saddle-ride vehicle in accordance with the present subject matter.
**Fig. 1a** illustrates a block diagram of an exhaust has monitoring system in the vehicle.
**Fig. 2** illustrates an exhaust gas monitoring system in accordance with the present subject matter.
**Fig. 3** illustrates an exhaust gas monitoring system where the lambda sensor module is located away from the vehicle in accordance with the present subject matter.
**Fig. 4** illustrates illustrates another embodiment of the catalytic converter monitoring system where the downstream oxygen sensor is replaced with a thermal sensor (303) in accordance with the present subject matter.
**Fig. 5** illustrates an embodiment of the exhaust gas monitoring system where the thermal sensor (303) is mounted on the outer surface of the catalytic converter in accordance with the present subject matter.
**Fig. 6-8** illustrates a flow diagram to depict the determination of the upstream oxygen sensor in accordance with the present subject matter.

### DETAILED DESCRIPTION

A catalyst conversion process is related to an oxygen storage capacity (OSC) of a catalytic convertor. As per known art, the measurement of OSC in the on-board catalytic diagnostic system is done by biasing the air-fuel ratio i.e., forcefully switching the system from closed loop to open loop and thereby, purging either rich or lean mixture depending on the threshold of air-fuel mixture. This method of measuring health of catalytic converter results in intruding the EFI (Electronic Fuel Injection) loop which effects the emissions and performance of the vehicle for the period of OSC measurement.

In order to eliminate extra cost involved in an extra sensor, as per known art a virtual lambda sensor (VLS) model is implemented using a singleton FIS (Fuzzy Interference System) in order to forecast air-fuel ratio by processing in cylinder pressure. Speed and cylinder pressure parameters are taken as datasets as possible inputs for the VLS model. After which, a clustering analysis is used to find appropriate input and also possible range of the outputs using the fuzzy logic. But even this virtual lambda sensor implemented by a fuzzy interference system has its own short coming. The method takes the cylinder pressure as primary input. Considering the cylinder pressure as the sole input may make the method ineffective and leaves no scope to eliminate any error.

Hence, it is the objective of the present invention to provide an exhaust gas monitoring system in a vehicle which eliminates the need for an upstream oxygen sensor to reduce the additional cost associated with an additional oxygen sensor while overcoming all problems cited above and other problems of known art. As per the present invention, an exhaust gas monitoring system is configured to determine an upstream oxygen sensor value through a lambda sensor module using inputs, from one or more sensors already provided in the vehicle, such as engine speed, MAP (Manifold Absolute Pressure) value, engine temperature sensor value, throttle position sensor value, engine load value, ignition fuel quantity, ignition timing etc.

Another embodiment of the invention provides an exhaust gas monitoring system in a vehicle which comprises a lambda sensor module to determine an upstream oxygen sensor value. The lambda sensor module is a separate controller in one embodiment which can be electrically connected to an engine control unit of the vehicle. The lambda sensor module can also be an integrated part of the engine control unit. In another embodiment the lambda sensor module can be present remotely in a remote server and the engine control unit can communicate to the remote server through wireless means such as Wi-Fi, Bluetooth, GPS/GPRS. A lambda sensor module functions as an upstream oxygen sensor but provides more accurate output by taking input from multiple sensors used in a vehicle.

Yet another embodiment of the invention provides an exhaust gas monitoring system with a lambda sensor module which receives inputs from various sensing units in the vehicle to determine the upstream oxygen value.

Still another embodiment of the present invention provides an exhaust gas monitoring system in which the upstream oxygen value is determined through a classification module using a statistical model and a performance module using an analytical model. In statistical model, calibration tests are conducted at several drive cycles and environmental conditions. One or more engine parameters are logged continuously. The data obtained from statistical model tests are classified according to various levels of equivalence ratio (air-fuel ratio) and classified according to various health levels of catalytic converter which is implemented into the exhaust gas monitoring system or module. A classification technique is implemented in the statistical model which enables to classify the parameters contributing better in determining the air-fuel ratio. Whereas the analytic model processes the engine parameters as an input and generates output in form of air-fuel ratio (AFR) or equivalence ratio which enables in determining the performance of the catalytic converter in terms of percentage.

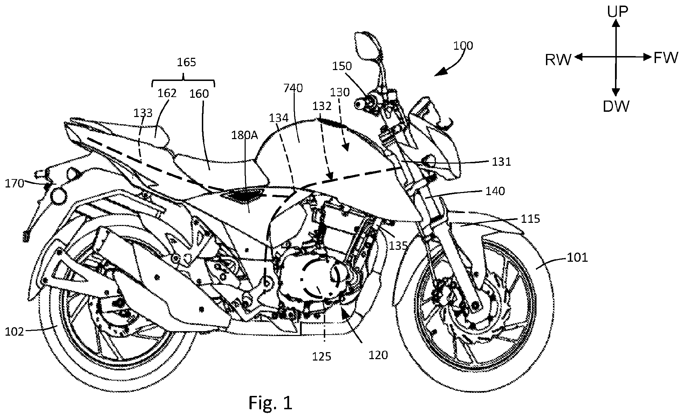

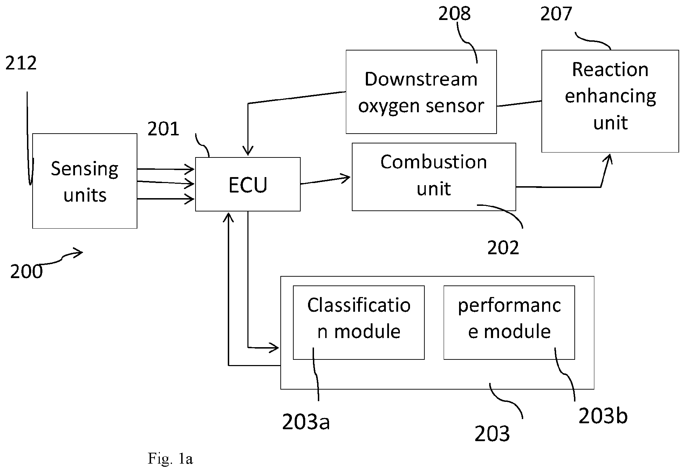

**Fig. 1** illustrates a right-side view of an exemplary saddle-ride vehicle 100 in accordance with the present subject matter. The saddle-ride vehicle (referred to as 'vehicle' for brevity) (100) includes a main frame (130) shown schematically by dotted lines that acts a structural member of the vehicle (100). Further, the vehicle (100) comprises a front wheel (101) and a rear wheel (102). The present subject matter is not limited to the motor vehicle with two-wheels, as it is considered only for ease of explanation, and it is applicable for any saddle-ride vehicle. The main frame (130) comprises a head tube (131), a main tube (132) and one or more rear tube(s) (133). In accordance with the current embodiment, the head tube (131) is disposed in a front portion of the vehicle (100). The main tube (132) extends rearward from the head tube (131) and the main tube (132) then forms a bending portion (134). Subsequent to the bending portion (134), the main tube (132) extends substantially downward. The one or more rear tube(s) (133) extend rearward from the bending portion (134). In one implementation, main tube (132) is a single tubular member. In another implementation, the main tube (132) may be formed by two or more tubes that are contiguously connected to form a single structure. The one or more rear tube(s) (133) has a front end connected to the bending portion (134). The one or more rear tube(s) (133) that extend inclinedly rearward may further comprises one or more bends in order to adapt to a layout of the vehicle (100). In an embodiment having two rear tubes, a front portion (not shown) thereof converges towards the bending portion (134) and the two rear tubes, towards the rearward direction, are spaced apart and are connected together using one or more cross-member(s) (not shown).

The vehicle (100) comprises a steering system (not shown) and a front suspension unit (140), which is part of the steering system. The steering system is rotatably movable with respect to the head tube (131). A handlebar assembly (150) is connected to the steering system for manoeuvring the vehicle (100). The front suspension unit (140) rotatably supports the front wheel (101). A power unit (120) is fixedly mounted to the frame assembly (130).In one embodiment; the frame assembly (130) includes a down tube (135), which extends obliquely downward from the head tube (131). The power unit (120) is fixedly supported by the main tube (132) and the down tube (135). The power unit (120), which is an internal combustion (IC) engine, is provided with an electrical machine (125) (shown in dotted line). In one implementation, the electrical machine (125) is mounted to a crankshaft (not shown) of the power unit (120) to rotate therewith. The electrical machine (125) is preferably, but not limited, to an integrated starter generator (ISG). The electrical machine (125) is configured to perform starting operation of the IC engine, charge a battery (not shown) of the vehicle (100) during operation of the IC engine, and even assist the IC engine. The power unit (120) is coupled to the rear wheel (102) through a transmission system (not shown). In the one implementation, the second wheel (102) is rotatably supported by a swing arm (not shown).

The vehicle (100) includes a fuel tank (740) that is mounted to the main tube (132) and is disposed rearward to the handlebar assembly (150). Further, a seat assembly (165) is disposed rearward to the fuel tank (740). The seat assembly (165), in one implementation, in an elongated structure, in longitudinal direction F-R, and is supported by the rear tubes (133). In another implementation, as depicted in Fig. 1, the seat assembly (165) is formed by a rider-seat (160) and a pillion-seat (162), which is disposed posterior to the rider-seat (160). Further, the vehicle (100) includes a front-fender (115) mounted to the front suspension unit (140) and configured to cover at least a portion of the first wheel (101). A rear-fender (170 ) is suspended below the seat assembly (165). The rear-fender (170 ) is configured to block splashing of water or dirt from the rear wheel (102) on to passers-by and other vehicles.

**Fig. 1a** illustrates a block diagram of an exhaust has monitoring system (200) in the vehicle (100). The exhaust has monitoring system (200) comprises a combustion unit (202) such as an engine (202) which receives an air-fuel mixture for combustion and provides the energy to put the vehicle (100) into motion. The engine (202) is configured to be controlled by an engine control unit (201). The engine (202) is connected to an intake manifold (not shown) which provides the airflow to aid the combustion of the fuel inside a combustion chamber of the engine (202).

A throttle valve (not shown) controls the amount of air going into the intake manifold and the throttle value is operated either manually or electrically by the rider. The opening of the throttle valve is measured by a throttle position sensor (not shown) and the throttle position sensor (not shown) sends a throttle position signal to the engine control unit (201). Similarly, a manifold air pressure sensor (not shown) sends a manifold air pressure signal to the engine control unit (201).The engine control unit (201) controls and monitors the engine (202) and other vehicular components. A reaction enhancing unit such as a catalytic converter (207) is configured to receive one or more type of gaseous matter from the combustion unit.

A lambda sensor module (203), provided either inside the ECU (201) or as a separate controller (as shown in Fig 1a), is configured to receive the inputs from the sensing units (212) and process the received input to determine an upstream oxygen value. The lambda sensor module (203) comprises a classification module (203a) which operates on a statistical model and a performance module (203b) which operates on an analytical model to determine the upstream oxygen value. The ECU (201) compares the upstream oxygen value, determined by the lambda sensor module (203), with a downstream oxygen sensor output. The ECU (201) compares a residence time (T) of the gaseous matter in the catalytic converter (207) with a predetermined threshold time (T') in order to determine an equivalence ratio in terms of percentage of useful life left or useful life covered by the catalytic convertor (207). This information is indicated to the user which enables the user of the vehicle to know about the health of the catalytic converter (207) of the vehicle without using an additional upstream oxygen sensor. The classification module (203b) and the performance module (203b) determines the upstream oxygen value when the vehicle undergoes acceleration, deceleration or when a fuel-cut command is executed.

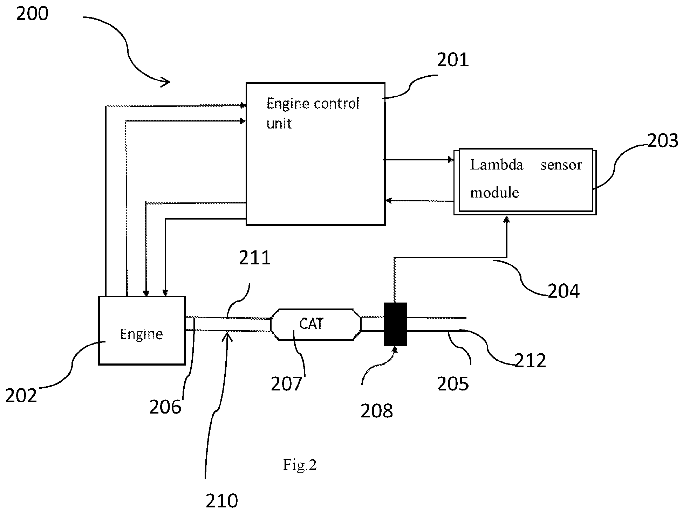

**Fig. 2** illustrates an exhaust gas monitoring system (200) as per an embodiment of the present invention. The exhaust gas monitoring system (200) comprises a combustion unit such as an engine (202) which receives an air-fuel mixture for combustion and provides the energy to put the vehicle (100) into motion. The engine (202) is configured to an engine control unit (201). The engine control unit (201) is electrically configured to receive inputs from sensing units (212) such as throttle position sensor, manifold air pressure (MAP) sensor, thermal sensor (303), speed sensor, engine temperature sensor etc.

The engine (202) produces toxic gases called emissions after combustion of fuel and to release the particulates and other toxic gases after combustion, an exhaust manifold (206) enables the release of such gases. The exhaust manifold (206) is connected to an exhaust tube (210). The exhaust tube (210) comprises an upstream portion (211) and a downstream portion (205). The upstream portion (211) lies between the engine (202) and the catalytic converter (207) whereas the downstream portion (205) lies between the catalytic converter and an exhaust downstream opening (212). The catalytic converter (207) is located between the upstream portion (211) and the downstream portion (205). In order to monitor the exhaust gases and the conversion of the exhaust gases, an oxygen sensor (208) is used. The oxygen sensor is located in a downstream portion (205) and monitors the operating efficiency of the catalytic converter (207). The vehicle (100) may be provided with an on-board diagnostic system to continuously monitor the emissions. The oxygen sensor located on the upstream portion (211) or the exhaust manifold (206), helps in monitoring an air/fuel ratio of the engine (202). Oxygen sensor located in the upstream portion (211) sends a signal indicating rich or lean fuel mixture. In rich fuel mixture, the air content is less in relation to the fuel and the oxygen sensor sends a high voltage signal whereas for lean fuel mixture (more air compared to fuel), a low voltage signal is generated by the oxygen sensor. The oxygen sensor data is analysed by the exhaust gas monitoring system to provide vital information about the health of the catalytic converter (207) to the engine control unit (201) monitored via a catalytic converter monitor (203) connected to the downstream oxygen sensor (208). Over a period of time the catalytic converter (207) starts deteriorating and the conversion efficiency of the catalytic converter starts declining. This poses a threat to the efficiency of the vehicle as well as hazard to the environment. It becomes necessary to replace the old catalytic converter (207) with a new one. Although multiple oxygen sensor or lambda sensor can be used to monitor the conversion efficiencies but implementing multiple oxygen or lambda sensor increases the overall cost of the vehicle (100).

A downstream oxygen sensor (208), located in the downstream portion (205), sends the signal indicative of the oxygen storage capacity of the catalytic converter (207) to a lambda sensor module (203). The lambda sensor module (203) can be a separate controller with its own memory and RAM (read only memory). The lambda sensor module (203) can also be an integrated with the engine control unit (201).

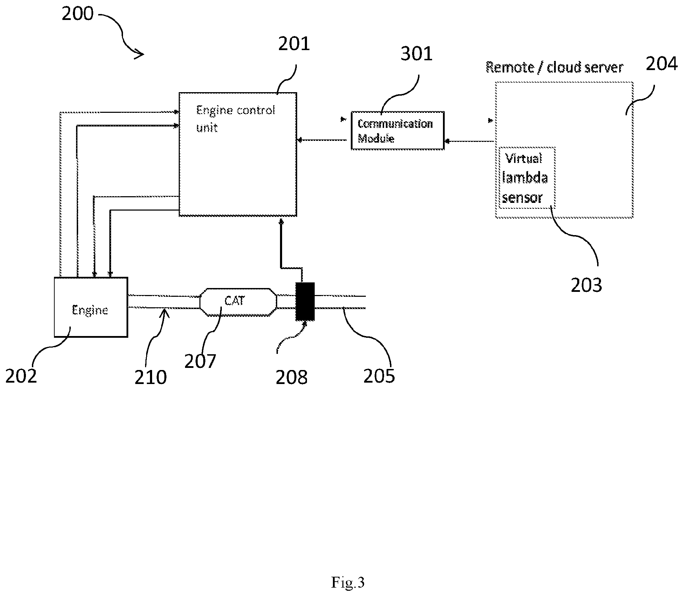

**Fig. 3** illustrates an exhaust gas monitoring system (200) where the lambda sensor module (203) is located remotely from the vehicle (100). The engine control unit (201) takes all the vehicular parameters and send the collected parameters to the lambda sensor module (203) through a communication module (301). The communication module (301) can be a wireless technology such as a Wi-Fi or Bluetooth or GPRS/GPS system. The communication module (301) is connected to a remote cloud server (204) which has the lambda sensor module (203) stored in it for processing. The remote cloud server (204) has a controller or a processor which stores the lambda sensor module (203).

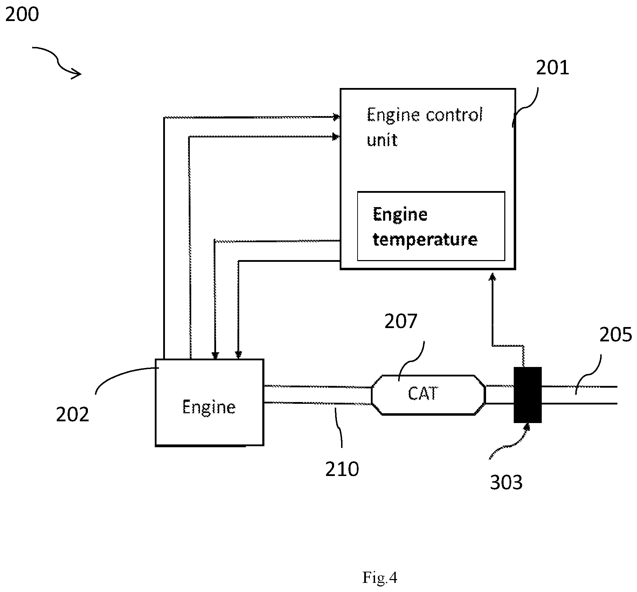

**Fig. 4** illustrates another embodiment of the exhaust gas monitoring system (200) where the downstream oxygen sensor (208) is replaced by a thermal sensor (303) such as an NTC (Negative Temperature Coefficient) type thermal sensor (303). The thermal sensor (303) can be placed in the downstream portion (205) similar to the location of the downstream oxygen sensor. The health/ efficiency of catalytic converter (207) can be determined by both its OSC and its temperature maps. By using an engine temperature sensor and an Intake air temperature sensor, the exhaust gas temperature is estimated by linear interpolation of the truth table comprising at least one of the values of Engine temperature, intake air temperature and engine load. The thermal sensor (303) present downstream to the catalytic converter (207) acquires the temperature of the exhaust gas post catalytic converter (207). By comparing these two values, we will be able to determine the catalytic converter (207) state of health. If the temperature difference is less than a predetermined threshold then the catalytic converter has deteriorated as the reactions inside catalytic converter produce more heat (exothermic reaction).

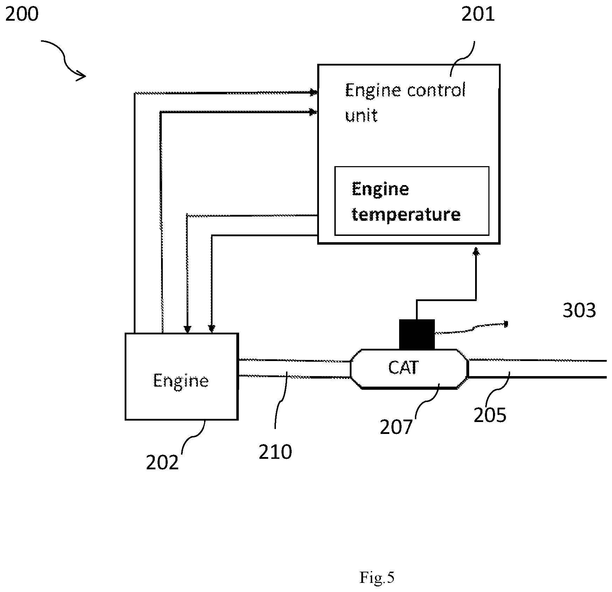

**Fig. 5** illustrates another embodiment of the exhaust gas monitoring system where the thermal sensor (303) is mounted on the outer surface of the catalytic converter and eliminates the downstream oxygen sensor (208) completely. In another embodiment, the thermal sensor (303) is located within the engine control unit (202). Depending upon the health of the catalytic converter (207) the temperature of the catalytic converter (207) varies. This variation will also affect the exhaust gases and hence the temperature measured downstream to catalytic converter also enable determining the health state of catalytic converter (207). First, the exhaust gas temperature at the exhaust port is determined by receiving a signal from a thermal sensor (303) disposed on an engine of the vehicle. Then the exhaust has temperature at the down stream of the catalytic converter (207) is determined based on signal received from the thermal sensor (303) disposed downstream of the catalytic convereter (207). Both the above mentioned temperatures are compared to determine the health of the catalytic converter (207).

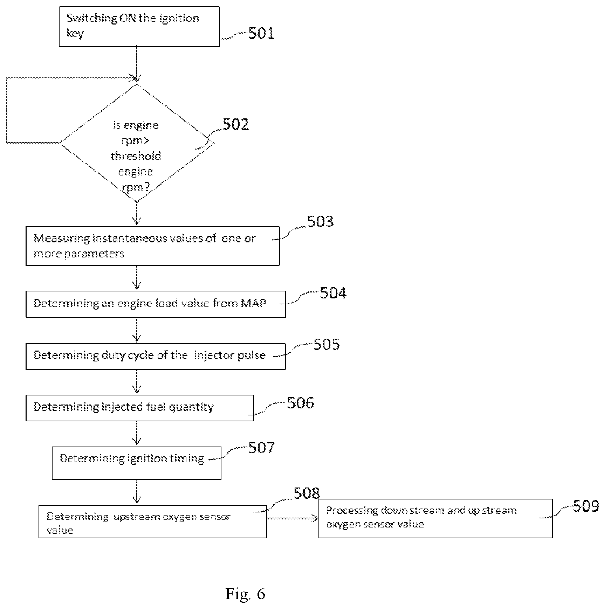

**Fig. 6-8** illustrates a flow diagram to depict the determination of the upstream oxygen value. In step (501) an ignition key is switched ON. In step 502, the lambda sensor module (203) receives the engine speed signal and checks whether the engine speed is greater than a threshold engine speed or not. When the engine speed is greater than the threshold engine speed, the lambda sensor module measures (203) one or more parameters such as an instantaneous engine speed, a manifold air pressure, a throttle position, injected fuel quantity,engine load, atmospheric pressure and an engine temperature in step 503. In step 504, an engine load value is determined from manifold air pressure. In step 505, a duty cycle of a fuel injector is measured and in step 506, the amount of injected fuel quantity in a duty cycle is measured. Then in step, 507, based on the engine speed (rpm) and engine load value determined by the measured manifold air pressure from the manifold air pressure sensor, an ignition timing is determined.

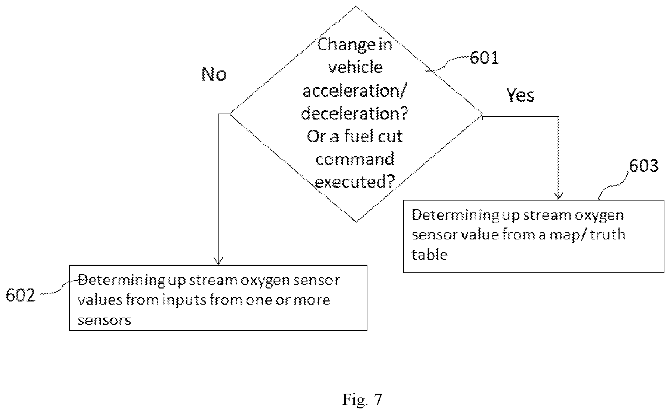

Further, in step 508, an upstream oxygen value is determined by means of any one of the embodiments explained above. In order to determine up stream oxygen value another process followed is represented by Fig 7 before progressing to step 509. The lambda sensor module (203) checks whether the vehicle (100) is in a transient condition or not i.e., the vehicle (100) is either accelerating or decelerating or in steady speed, in step 601. Along with checking the transient condition, a fuel cut command is also checked. If there is no acceleration or deceleration of the vehicle or a fuel cut command is not executed then the upstream oxygen value is determined from an engine equation through engine rpm, manifold air pressure ,throttle position, engine load, injected fuel quantity, and ignition timing (step 602). Through the engine equation the combustion timing is predicted and the amount of energy generated during combustion is determined and whether the air-fuel ratio (lean fuel or a rich fuel) is also determined.

But if there is an acceleration or deceleration of the vehicle or if fuel cut command is executed, then in step 603, the upstream oxygen sensor value is determined from a truth table of a map which comprises of parameters such as engine rpm, ignition timing and, engine load value, that is, the statistical model is implemented. The data is generated for these parameters by repeated testing and calibration wherein as per an embodiment, the table is a look-up table. A database is created after generating and storing the values of the parameters from the testing processes. The data from the database is provided to the lambda sensor module. The lambda sensor module (203) uses the database generated from the parameters i.e., engine rpm, ignition timing, and engine load value to generate the upstream oxygen value.

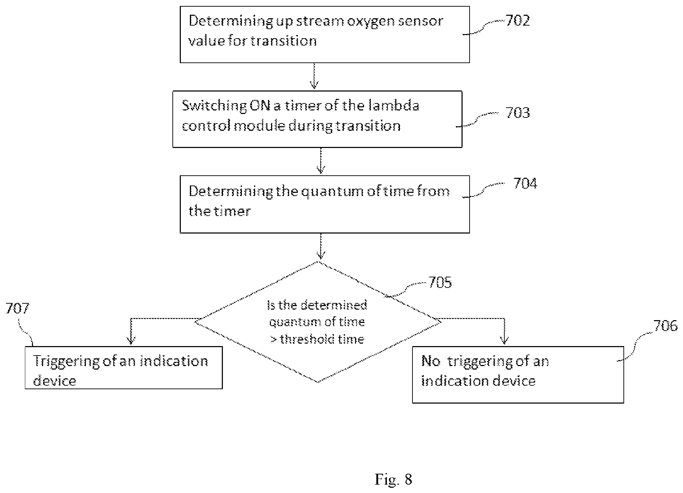

After the upstream oxygen value is determined, the upstream oxygen value and a downstream oxygen sensor value are processed in step 509. During processing following steps are followed as represented by flowchart in Fig 8. In step 702, the transition of the upstream oxygen value is determined. The transition of the fuel mixture can be from lean to rich or vice e versa. A timer of the lambda sensor module (203) is triggered to switch ON during the transition. The timer of the lambda sensor module is stopped when the downstream oxygen sensor value under goes transition. The quantum of time also called residence time (T) is determined, in step 704, from the timer of the lambda sensor module (203). The residence time (T) is effectively the average length of time for which an entity remains in a catalytic converter. The health of the catalytic converter is determined by the ECU based on a lookup table. If the residence time (T) is smaller than a predetermined threshold time (T') (in step 705) then no action is taken in step 707, which suggests that the catalytic converter is functioning properly but if the timer value is greater than the threshold value then the indication signal is generated to indicate that the catalytic converter is not functioning properly and need to be replaced with a new catalytic converter, in step 706.

### LIST OF REFERENCE SIGNS

| | |
|---|---|
| vehicle | (100) |
| main frame | (130) |
| front wheel | (101) |
| rear wheel | (102) |
| head tube | (131) |
| main tube | (132) |
| rear tube | (133) |
| bending portion | (134) |
| power unit | (120) |
| down tube | (135) |
| handlebar assembly | (150) |
| seat assembly | (165) |
| rider-seat | (160) |
| pillion-seat | (162) |
| front-fender | (115) |
| exhaust gas monitoring system | (200) |
| front suspension unit | (140) |
| rear-fender | (175) |
| engine | (202) |
| thermal sensor | (303) |
| engine control unit | (201) |
| catalytic converter | (207) |
| exhaust manifold | (206) |
| upstream portion | (211) |
| downstream portion | (205) |
| exhaust opening | (212) |
| oxygen sensor | (208) |
| lambda sensor module | (203) |
| communication module | (301) |
| remote cloud server | (203) |
| classification module | (203a) |
| performance module | (203b) |

## Claims

1. An exhaust gas monitoring system (200) in a vehicle (100), said exhaust gas monitoring system (200) comprising:
a combustion unit (202), said combustion unit (202) being configured to be controlled by an engine control unit (201);
a reaction enhancing unit (207), said reaction enhancing unit (207) being configured to receive one or more types type of gaseous matter from said combustion unit (202);
one or more sensing units (212), said one or more sensing units (212) being configured to provide one or more electrical inputs to said engine control unit (201); and
a lambda sensor module (203), said lambda sensor module (203) being configured to receive and process said one or more electrical inputs, said one or more electrical inputs being received from said one or more sensing units (212), said one or more electrical inputs being used to determine an upstream oxygen value, said upstream oxygen value is corresponding to an upstream region of said reaction enhancing unit (207),
**characterized in that**
said engine control unit (201) is configured to receive said upstream oxygen value and compare said upstream oxygen value with a value of a downstream oxygen sensor output, and wherein, said engine control unit (201) being configured to compare a residence time (T) of gaseous matter in said reaction enhancing unit (207) with a predetermined threshold time (T') to determine an equivalence ratio.

2. The exhaust gas monitoring system (200) as claimed in claim 1, wherein said reaction enhancing unit (207) is a catalytic converter.

3. The exhaust gas monitoring system (200) as claimed in claim 1, wherein said combustion unit (202) is an internal combustion engine.

4. The exhaust gas monitoring system (200) as claimed in claim 1, wherein said one or more sensing unit (212) comprises at least one of an oxygen sensor, a thermal sensor (303), a speed sensor, a MAP sensor, and an engine temperature sensor, wherein, said thermal sensor (303) being mounted on an outer surface of said reaction enhancing unit (207).

5. The exhaust gas monitoring system (200) as claimed in claim 4, wherein said thermal sensor (303) is in contact with said engine.

6. The exhaust gas monitoring system (200) as claimed in claim 4, wherein said thermal sensor (303) is disposed in a downstream portion (205) of said reaction enhancing unit (207).

7. The exhaust gas monitoring system (200) as claimed in claim 1, wherein said engine control unit (201) is configured to be connected to said lambda sensor module (203), said lambda sensor module (203) being disposed in a remote cloud server (204), wherein said remote cloud server (204) is configured to determine said upstream oxygen value based on said one or more electrical inputs, wherein said remote cloud server being accessible through a wireless communication module, and said wireless communication module being one of a Wi-Fi, a Bluetooth and a GPRS/GPS system.

8. The exhaust gas monitoring system (200) as claimed in claim 1, wherein said residence time (T) is determined based on one or more parameters,
said one or more parameters being at least one of a throttle opening, an engine speed, a manifold air pressure, an engine load, air-fuel quantity, and an exhaust gas temperature.

9. The exhaust gas monitoring system (200) as claimed in claim 1, wherein said lambda sensor module (203) comprises a classification module (203a) and a performance module (203b),
wherein said classification module (203a) is configured to implement a statistical model; and
said performance module (203b) is configured to implement an analytical model.

10. The exhaust gas monitoring system (200) as claimed in claim 9, wherein said statistical model of said classification module (203a) is configured to classify one or more engine parameters to determine an air-fuel ratio (AFR);
said one or more engine parameters comprising at least one of an engine speed, a throttle position, a manifold air pressure, an atmospheric pressure, an engine load, an injected fuel quantity and an engine temperature.

11. The exhaust gas monitoring system (200) as claimed in claim 9, wherein said performance module (203b) processes said one or more engine parameters as an input, and is configured to determine and generate an output of said air-fuel ratio (AFR);
said one or more engine parameters being an engine speed, a throttle position, a manifold air pressure, an atmospheric pressure, an engine load, an injected fuel quantity and an engine temperature.

12. The exhaust gas monitoring system (200) as claimed in claim 9, wherein said classification module (203a) and said performance module (203b) are configured to determine an upstream oxygen sensor value when said vehicle (100) undergoes acceleration, deceleration, or when a fuel-cut command is executed.

13. A method to determine an upstream oxygen value from an exhaust gas monitoring system (200) in a vehicle (100), **characterized in that** said method comprising steps of:
checking an engine speed through a lambda sensor module (203);
comparing said engine speed with a threshold engine speed;
measuring one or more parameters;
determining an engine load value;
determining a duty cycle of a fuel injector;
measuring an injected fuel quantity in said duty cycle;
processing a downstream oxygen sensor value and then determining said upstream oxygen sensor value.

14. The method to determine an upstream oxygen value from an exhaust gas monitoring system (200) in a vehicle (100) as claimed in claim 13, wherein determining said upstream oxygen value comprises:
checking whether one of a change in acceleration or a fuel cut command being actuated for said vehicle (100);
receiving one of said change in acceleration and a fuel cut command;
determining said upstream oxygen value from said parameters, said parameters being at least one of an engine rpm, manifold air pressure, throttle position, engine load, injected fuel quantity, ignition timing when no change in acceleration or fuel cut command is detected; and
determining said upstream oxygen value from a truth table being based on inputs from one or more sensing units (212) when there is change in acceleration or a fuel cut command being detected.

15. The method to determine an upstream oxygen sensor value from an exhaust gas monitoring system (200) in a vehicle (100) as claimed in claim 13, wherein said processing a downstream oxygen value and said upstream oxygen sensor value comprises:
determining up stream oxygen value for transition;
switching ON a timer of said lambda sensor module (203) during a transition of a combustion state of an engine of said vehicle (100) from one of a rich state to a lean state and a lean state to a rich state;
determining a residence time (T) of gaseous matter in said reaction enhancing unit (27) from said timer; and
indicating deterioration of a reaction enhancing unit (207) when said determined residence time (T) being greater than a predetermined threshold time (T').

## Patentansprüche

1. Abgasüberwachungssystem (200) in einem Fahrzeug (100), wobei das Abgasüberwachungssystem (200) aufweist:
eine Verbrennereinheit (202), wobei die Verbrennereinheit (202) von einer Motorsteuereinheit (201) steuerbar ist;
eine Reaktionsverstärkungseinheit (207), wobei die Reaktionsverstärkungseinheit (207) dazu eingerichtet ist, eine oder mehrere Arten gasförmiger Stoffe von der Verbrennereinheit (202) zu empfangen;
eine oder mehrere Sensoreinheiten (212), wobei die eine oder mehreren Sensoreinheiten (212) dazu eingerichtet sind, einen oder mehrere elektrische Eingänge an die Motorsteuereinheit (201) liefern; und
ein Lambdasonden-Modul (203), wobei das Lambdasonden-Modul (203) dazu eingerichtet ist, die elektrische(n) Eingabe(n) zu empfangen und zu verarbeiten, wobei die elektrische(n) Eingabe(n) von der bzw. den Sensoreinheiten (212) empfangen werden, wobei die elektrische(n) Eingabe(n) zum Bestimmen eines stromaufwärtigen Sauerstoffwerts verwendet werden, wobei der stromaufwärtige Sauerstoffwert einem stromaufwärts liegenden Bereich der Reaktionsverstärkungseinheit (207) entspricht,
**dadurch gekennzeichnet, dass**
die Motorsteuereinheit (201) dazu eingerichtet ist, den stromaufwärtigen Sauerstoffwert zu empfangen und den stromaufwärtigen Sauerstoffwert mit einem Wert einer stromabwärts liegenden Sauerstoffsensorausgabe zu vergleichen, und die Motorsteuereinheit (201) dazu eingerichtet ist, eine Verweildauer (T) gasförmiger Stoffen in der Reaktionsverstärkungseinheit (207) mit einer vorbestimmten Schwellenzeit (T') zu vergleichen, um ein Äquivalenzverhältnis zu bestimmen.

2. Abgasüberwachungssystem (200) nach Anspruch 1, wobei die Reaktionsverstärkungseinheit (207) ein Katalysator ist.

3. Abgasüberwachungssystem (200) nach Anspruch 1, wobei die Verbrennereinheit (202) ein Verbrennungsmotor ist.

4. Abgasüberwachungssystem (200) nach Anspruch 1, wobei die eine bzw. mehreren Sensoreinheiten (212) zumindest eines aus einem Sauerstoffsensor, einem Temperatursensor (303), einem Drehzahlsensor, einem MAP-Sensor und einem Motortemperatursensor umfassen, wobei der Temperatursensor (303) an einer Außenfläche der Reaktionsverstärkungseinheit (207) angebracht ist.

5. Abgasüberwachungssystem (200) nach Anspruch 4, wobei der Wärmesensor (303) mit dem Motor in Kontakt steht.

6. Abgasüberwachungssystem (200) nach Anspruch 4, wobei der Wärmesensor (303) sich in einem stromabwärts liegenden Abschnitt (205) der Reaktionsverstärkungseinheit (207) befindet.

7. Abgasüberwachungssystem (200) gemäß Anspruch 1, wobei die Motorsteuereinheit (201) mit dem Lambdasonden-Modul (203) verbindbar eingerichtet ist, wobei das Lambdasonden-Modul (203) in einem Remote-Cloud-Server (204) angeordnet ist, wobei der Remote-Cloud-Server (204) dazu eingerichtet ist, den stromaufwärtigen Sauerstoffwert aufgrund der elektrischen Eingabe(n) zu bestimmen, wobei der Remote-Cloud-Server über ein drahtloses Kommunikationsmodul zugänglich ist und das drahtlose Kommunikationsmodul eines von einem Wi-Fi-, einem Bluetooth- und einem GPRS/GPS-System ist.

8. Abgasüberwachungssystem (200) nach Anspruch 1, wobei die Verweildauer (T) aufgrund eines oder mehrerer Parameter bestimmt wird, wobei der bzw. die Parameter zumindest eines ist von: Drosselklappenöffnung, Motordrehzahl, Ladedruck, Motorlast, Luft-Kraftstoff-Menge und Abgastemperatur.

9. Abgasüberwachungssystem (200) nach Anspruch 1, wobei das Lambdasonden-Modul (203) ein Klassifizierungsmodul (203a) und ein Leistungsmodul (203b) umfasst,
wobei das Klassifizierungsmodul (203a) zum Implementieren eines statistischen Modells eingerichtet ist und
das Leistungsmodul (203b) zum Implementieren eines analytischen Modells eingerichtet ist.

10. Abgasüberwachungssystem (200) gemäß Anspruch 9, wobei das statistische Modell des Klassifizierungsmoduls (203a) dazu eingerichtet ist, einen oder mehrere Motorparameter zum Bestimmen eines Luft-Kraftstoff-Verhältnisses (AFR) zu klassifizieren;
wobei der bzw. die Motorparameter zumindest eines von einer Motordrehzahl, Gashebelstellung, Ladedruck, atmosphärischer Druck, Motorlast, eingespritzte Kraftstoffmenge und Motortemperatur umfassen.

11. Abgasüberwachungssystem (200) gemäß Anspruch 9, wobei das Leistungsmodul (203b) den bzw. die Motorparameter als Eingabe verarbeitet und dazu eingerichtet ist, das Luft-KraftstoffVerhältnis (AFR) bestimmt und als Ausgabe zu erzeugen;
wobei der bzw. die Motorparameter eine Motordrehzahl, eine Drosselklappenstellung, ein Ladedruck, ein atmosphärischer Druck, eine Motorlast, eine eingespritzte Kraftstoffmenge und eine Motortemperatur sind.

12. Abgasüberwachungssystem (200) nach Anspruch 9, wobei das Klassifizierungsmodul (203a) und das Leistungsmodul (203b) zum Bestimmen eines stromaufwärtigen Sauerstoffsensorwerts eingerichtet sind, wenn das Fahrzeug (100) beschleunigt oder verzögert wird oder wenn ein Kraftstoffabschaltbefehl ausgeführt wird.

13. Verfahren zum Bestimmen eines stromaufwärtigen Sauerstoffwerts aus einem Abgasüberwachungssystem (200) in einem Fahrzeug (100), **dadurch gekennzeichnet, dass** das Verfahren die Schritte umfasst:
Überprüfen einer Motordrehzahl über ein Lambdasonden-Modul (203);
Vergleichen der Motordrehzahl mit einer Schwellenmotordrehzahl;
Messen eines oder mehrerer Parameter;
Bestimmen eines Motorlastwerts;
Bestimmen eines Arbeitszyklus eines Kraftstoffinjektors;
Messen einer eingespritzten Kraftstoffmenge in dem Arbeitszyklus;
Verarbeiten eines stromabwärtigen Sauerstoffsensorwerts und sodann Bestimmen des stromaufwärtigen Sauerstoffsensorwerts.

14. Verfahren zum Bestimmen eines stromaufwärtigen Sauerstoffwerts aus einem Abgasüberwachungssystem (200) in einem Fahrzeug (100) nach Anspruch 13, wobei das Bestimmen des stromaufwärtigen Sauerstoffwerts umfasst:
Überprüfen, ob eine Änderung der Beschleunigung oder ein Kraftstoffabschaltbefehl für das Fahrzeug (100) ausgelöst worden ist;
Empfangen der Änderung der Beschleunigung bzw. des Kraftstoffabschaltbefehls;
Bestimmen des stromaufwärtigen Sauerstoffwerts aus besagten Parametern, wobei die Parameter zumindest eines sind von: Motordrehzahl, Ladedruck, Gashebelstellung, Motorlast, eingespritzte Kraftstoffmenge, Zündzeitpunkt, wenn keine Änderung der Beschleunigung oder kein Kraftstoffabschaltbefehl erkannt wird; und
Bestimmen des stromaufwärtigen Sauerstoffwerts aus einer Wahrheitstabelle basierend auf Eingaben von einer oder mehreren Sensoreinheiten (212), wenn eine Änderung der Beschleunigung oder ein Kraftstoffabschaltbefehl erkannt wird.

15. Verfahren zum Bestimmen eines stromaufwärtigen Sauerstoffsensorwerts aus einem Abgasüberwachungssystem (200) in einem Fahrzeug (100) gemäß Anspruch 13, wobei das Verarbeiten eines stromabwärtigen Sauerstoffwerts und des stromaufwärtigen Sauerstoffsensorwerts umfasst:
Bestimmen eines stromaufwärtigen Sauerstoffwerts für den Übergang;
Einschalten eines Zeitgebers des Lambdasonden-Moduls (203) während eines Übergangs eines Verbrennungszustands eines Motors des Fahrzeugs (100) von einem fetten Zustand zu einem mageren Zustand und von einem mageren Zustand zu einem fetten Zustand;
Bestimmen einer Verweildauer (T) gasförmiger Stoffe in der Reaktionsverstärkungseinheit (27) aus dem Zeitgeber; und
Anzeigen einer Verschlechterung einer Reaktionsverstärkungseinheit (207), wenn die bestimmte Verweildauer (T) größer ist als eine vorbestimmte Schwellenzeit (T').

## Revendications

1. Système de surveillance des gaz d'échappement (200) dans un véhicule (100), ledit système de surveillance des gaz d'échappement (200) comprenant :
une unité de combustion (202), ladite unité de combustion (202) étant configurée pour être commandée par une unité de commande du moteur (201) ;
une unité d'amélioration de la réaction (207), ladite unité d'amélioration de la réaction (207) étant configurée pour recevoir un ou plusieurs types de matières gazeuses provenant de ladite unité de combustion (202) ;
une ou plusieurs unités de détection (212), ladite ou lesdites unités de détection (212) étant configurées pour fournir une ou plusieurs entrées électriques à ladite unité de commande du moteur (201) ; et
un module de sonde lambda (203), ledit module de sonde lambda (203) étant configuré pour recevoir et traiter ladite ou lesdites entrées électriques, ladite ou lesdites entrées électriques étant reçues de ladite ou desdites unités de détection (212), ladite ou lesdites entrées électriques étant utilisées pour déterminer une valeur d'oxygène en amont, ladite valeur d'oxygène en amont correspondant à une région en amont de ladite unité d'amélioration de la réaction (207),
**caractérisé en ce que**
ladite unité de commande du moteur (201) est configurée pour recevoir ladite valeur d'oxygène en amont et comparer ladite valeur d'oxygène en amont à une valeur d'une sortie de capteur d'oxygène en aval, et ladite unité de commande du moteur (201) étant configurée pour comparer un temps de séjour (T) de matière gazeuse dans ladite unité d'amélioration de la réaction (207) à un temps seuil prédéterminé (T') afin de déterminer un rapport d'équivalence.

2. Système de surveillance des gaz d'échappement (200) selon la revendication 1, dans lequel ladite unité d'amélioration de la réaction (207) est un convertisseur catalytique.

3. Système de surveillance des gaz d'échappement (200) selon la revendication 1, dans lequel ladite unité de combustion (202) est un moteur à combustion interne.

4. Système de surveillance des gaz d'échappement (200) selon la revendication 1, dans lequel ladite ou lesdites unités de détection (212) comportent au moins l'un parmi un d'un capteur d'oxygène, un capteur thermique (303), un capteur de vitesse, un capteur MAP et un capteur de température du moteur, ledit capteur thermique (303) étant monté sur une surface extérieure de ladite unité d'amélioration de la réaction (207).

5. Système de surveillance des gaz d'échappement (200) selon la revendication 4, dans lequel ledit capteur thermique (303) est en contact avec ledit moteur.

6. Système de surveillance des gaz d'échappement (200) selon la revendication 4, dans lequel ledit capteur thermique (303) est disposé dans une partie aval (205) de ladite unité d'amélioration de la réaction (207).

7. Système de surveillance des gaz d'échappement (200) selon la revendication 1, dans lequel ladite unité de commande du moteur (201) est configurée pour être connectée audit module de sonde lambda (203), ledit module de sonde lambda (203) étant disposé dans un serveur cloud distant (204), ledit serveur cloud distant (204) étant configuré pour déterminer ladite valeur d'oxygène en amont sur la base d'une ou plusieurs entrées électriques, ledit serveur cloud distant étant accessible via un module de communication sans fil, et ledit module de communication sans fil étant l'un parmi un système Wi-Fi, Bluetooth et GPRS/GPS.

8. Système de surveillance des gaz d'échappement (200) selon la revendication 1, dans lequel ledit temps de séjour (T) est déterminé sur la base d'un ou plusieurs paramètres,
ledit ou lesdits paramètres étant au moins l'un parmi une ouverture du papillon des gaz, une vitesse du moteur, une pression d'air dans le collecteur, une charge du moteur, une quantité d'air-carburant et une température des gaz d'échappement.

9. Système de surveillance des gaz d'échappement (200) selon la revendication 1, dans lequel ledit module de sonde lambda (203) comporte un module de classification (203a) et un module de performance (203b),
ledit module de classification (203a) étant configuré pour mettre en œuvre un modèle statistique ; et
ledit module de performance (203b) étant configuré pour mettre en œuvre un modèle analytique.

10. Système de surveillance des gaz d'échappement (200) selon la revendication 9, dans lequel ledit modèle statistique dudit module de classification (203a) est configuré pour classer un ou plusieurs paramètres du moteur afin de déterminer un rapport air-carburant (AFR) ;
ledit ou lesdits paramètres du moteur comprenant au moins l'un parmi la vitesse du moteur, la position du papillon des gaz, la pression d'air dans le collecteur, la pression atmosphérique, la charge du moteur, la quantité de carburant injectée et la température du moteur.

11. Système de surveillance des gaz d'échappement (200) selon la revendication 9, dans lequel ledit module de performance (203b) traite ledit ou lesdits paramètres du moteur en tant qu'entrée, et est configuré pour déterminer et générer une sortie dudit rapport air-carburant (AFR) ;
lesdits paramètres du moteur étant la vitesse du moteur, la position du papillon des gaz, la pression d'air dans le collecteur, la pression atmosphérique, la charge du moteur, la quantité de carburant injectée et la température du moteur.

12. Système de surveillance des gaz d'échappement (200) selon la revendication 9, dans lequel ledit module de classification (203a) et ledit module de performance (203b) sont configurés pour déterminer une valeur de capteur d'oxygène en amont lorsque ledit véhicule (100) subit une accélération, une décélération ou lorsqu'une commande de coupure de carburant est exécutée.

13. Procédé pour déterminer une valeur d'oxygène en amont à partir d'un système de surveillance des gaz d'échappement (200) dans un véhicule (100), **caractérisé en ce que** ledit procédé comprend les étapes suivantes :
vérifier la vitesse du moteur à l'aide d'un module de sonde lambda (203) ;
comparer ladite vitesse du moteur à une vitesse de moteur seuil ;
mesurer un ou plusieurs paramètres ;
déterminer une valeur de charge du moteur ;
déterminer un cycle de service d'un injecteur de carburant ;
mesurer une quantité de carburant injectée dans ledit cycle de service ;
traiter une valeur de capteur d'oxygène en aval, puis déterminer ladite valeur de capteur d'oxygène en amont.

14. Procédé pour déterminer une valeur d'oxygène en amont à partir d'un système de surveillance des gaz d'échappement (200) dans un véhicule (100) selon la revendication 13, dans lequel la détermination de ladite valeur d'oxygène en amont comprend :
vérifier si l'un d'un changement d'accélération ou d'une commande de coupure de carburant est actionné pour ledit véhicule (100) ;
recevoir l'un dudit changement d'accélération et de ladite commande de coupure de carburant ;
déterminer ladite valeur d'oxygène en amont à partir desdits paramètres, lesdits paramètres étant au moins l'un parmi le régime moteur, la pression d'air dans le collecteur, la position du papillon des gaz, la charge du moteur, la quantité de carburant injectée, le calage de l'allumage lorsqu'aucun changement d'accélération ou aucune commande de coupure de carburant n'est détecté ; et
déterminer ladite valeur d'oxygène en amont à partir d'une table de vérité basée sur les entrées provenant d'une ou plusieurs unités de détection (212) lorsqu'un changement d'accélération ou une commande de coupure de carburant est détecté.

15. Procédé pour déterminer une valeur de capteur d'oxygène en amont à partir d'un système de surveillance des gaz d'échappement (200) dans un véhicule (100) selon la revendication 13, dans lequel ledit traitement d'une valeur d'oxygène en aval et de ladite valeur de capteur d'oxygène en amont comporte :
déterminer une valeur d'oxygène en amont pour la transition ;
activer une minuterie dudit module de sonde lambda (203) pendant une transition d'un état de combustion d'un moteur dudit véhicule (100) d'un état riche à un état pauvre et d'un état pauvre à un état riche ;
déterminer un temps de séjour (T) de la matière gazeuse dans ladite unité d'amélioration de la réaction (27) à partir de ladite minuterie ; et
indiquer une détérioration d'une unité d'amélioration de la réaction (207) lorsque ledit temps de séjour déterminé (T) est supérieur à un temps seuil prédéterminé (T').
